Europäisches Patentamt

European Patent Office

Office européen des brevets

(19)

(11) Veröffentlichungsnummer : **0 154 658**
**B1**

(12) **EUROPÄISCHE PATENTSCHRIFT**

(45) Veröffentlichungstag der Patentschrift :
21.12.88

(51) Int. Cl.⁴ : **G 03 B 27/80**, G 03 B 27/46

(21) Anmeldenummer : **84102710.5**

(22) Anmeldetag : **13.03.84**

(54) **Vorrichtung zur automatischen Mikroverfilmung von Dokumenten.**

(43) Veröffentlichungstag der Anmeldung :
**18.09.85 Patentblatt 85/38**

(45) Bekanntmachung des Hinweises auf die Patenterteilung : **21.12.88 Patentblatt 88/51**

(84) Benannte Vertragsstaaten :
**AT BE CH DE FR GB IT LI NL SE**

(56) Entgegenhaltungen :
FR—A— 2 313 697
US—A— 2 552 266
US—A— 3 342 100
US—A— 3 885 871
US—A— 4 035 074
US—A— 4 174 174
US—A— 4 190 353
US—A— 4 192 594
US—A— 4 324 474
US—A— 4 408 876

(73) Patentinhaber : **Staude Foto Chemie Eva Staude**
**Beundestrasse 6**
**D-6366 Wölfersheim (DE)**

(72) Erfinder : **Staude, Eckhard**
**Beundestrasse 6**
**D-6366 Wölfersheim 4 (DE)**
Erfinder : **Kaus, Jürgen**
**Weinbergstrasse 9**
**D-6366 Wölfersheim 1 (DE)**

(74) Vertreter : **Linser, Heinz et al**
**Patentanwälte Heinz Linser Dipl. Ing. Eckhardt Eyer**
**Robert-Bosch-Strasse 12a Postfach 10 22 10**
**D-6072 Dreieich (DE)**

## Beschreibung

Die Erfindung betrifft eine Vorrichtung zur rechnergesteuerten Mikroverfilmung der Vor- und/oder Rückseite von Dokumenten verschiedener Formate auf Mikroplanfilmen und zur Entwicklung derselben im Durchlaufverfahren, mit einer Einrichtung zum automatischen Dokumenteinzug aus einem eingegebenen Stapel von Dokumenten eines bestimmten Formates und zum automatischen Transport durch eine Beleuchtungsvorrichtung, mit einer Formatverstellvorrichtung und einer Wechselobjektivkamera mit Beleuchtungs- und Spiegelsystem sowie einem motorgetriebenen Filmtransportschlitten.

Zur Sicherung von Dokumenten jeglicher Art und/oder zur raumsparenden Erfassung und Wiedergabe von Literaturstellen ist die Mikroverfilmung als ein hervorragendes Mittel besonders geeignet und wird daher von den verschiedensten Anwendern, wie beispielsweise den Banken, Bibliotheken, Industriefirmen, Instituten und Patentämtern intensiv im In- und Ausland benutzt.

Zur Mikroverfilmung sind Kameras bekannt, mit deren Hilfe die zu verfilmenden Dokumente von Hand einzeln aufgenommen werden. Nach der Belichtung eines Mikroplanfilmes, welcher auch Fiches genannt wird, schließt sich getrennt davon und mit einer besonderen Kamera oder mit spezifischen Hilfsmitteln die Verfilmung des Titels und der Kennzeichnung an. Die Zählung der einzelnen Planfilme einer Serie erfolgt durch den Bearbeiter, der zur Aufnahme der Seriennummer und/oder des Datums auf den Planfilm ein entsprechendes Bild fertigen und verfilmen muß. Nach Durchführung solcher Arbeiten wird der Planfilm einer an sich bekannten automatisch arbeitenden Entwicklungsvorrichtung zugeführt, welche den belichteten Film entwickelt und getrocknet abgibt.

Sehr viele Anwender der Mikrofilmtechnik müssen große Dokumentenmengen, welche oftmals unterschiedliche Formate aufweisen, in möglichst kurzer Zeit mit ihrer Vor- und Rückseite aufnehmen und zwar zusammen mit bestimmten Kennzeichnungen, welche selbst nicht auf den Dokumenten vorhanden sind, wie beispielsweise Registriernummern, Firmenkennzeichnungen und dergleichen. Derartige Arbeiten sind mit den zur Zeit bekannten Geräten sehr personalaufwendig und beanspruchen sehr viel Zeit. Darüberhinaus sind sehr leicht Fehlkennzeichnungen möglich, so daß die gesamte Verfilmung von beispielsweise 94 Dokumenten wiederholt werden muß.

Die Verwendung von Mikroprozessoren zur Steuerung von Geräten zur Mikroverfilmung geht beispielsweise aus der US-A-4 324 474 hervor. Der verwendete Mikroprozessor steuert hierbei die wesentlichsten Aufnahmefunktionen zur Vermeidung von Fehlbedienungen, wie beispielsweise die Anpassung einer Maske an das zu verfilmende Dokument oder die Steuerung der Belichtungszeit. Diese bekannten Geräte sind mit einer einsetzbaren Kamera ausgerüstet, welche beispielsweise zur Entwicklung des Films aus dem Gerät entfernt wird, so daß eine vollautomatische Funktion nicht gegeben ist.

Aus der FR-A-2 313 697 ist es ferner bekannt Dokumentenmikroverfilmkameras mit Kennzeichnungskameras zu kombinieren. Hierbei wird ein Mikrorollfilm verarbeitet, welcher sich vorwiegend für die Verfilmung von zusammengehörenden Dokumenten oder für solche Dokumente eignet, welche nicht ständig einem Zugriff unterliegen sollen. Der Rollfilm wird zwar in Abschnitte geschnitten und in Taschen gelagert, dennoch ist seine Handhabung zum Auffinden, Lesen und Kopieren eines verfilmten Dokuments umständlich und damit aufwendig.

Der Erfindung liegt daher die Aufgabe zugrunde eine Vorrichtung zur automatischen Mikroverfilmung und Entwicklung anzugeben, mit deren Hilfe eine automatische Verfilmung einer großen Anzahl von Dokumenten möglich ist, wobei nach Wahl gleichzeitig die Vor- und Rückseite eines Dokuments im Fließbildaufnahmeverfahren aufgenommen werden kann, die Zählung automatisch erfolgt und in der gleichen Kamera sowohl die Verfilmung des Titels, eines Firmenzeichens und einer laufenden und damit veränderbaren Kennzeichnung, wie beispielsweise des Datums, im gleichen Arbeitsgang wie die Verfilmung der Dokumente, d. h. im Durchlaufverfahren erfolgt, wobei jedoch der Titel selbst als Standbild aufgenommen werden kann, wobei diese Standbilder vollständige Mikrofilmformate einnehmen können.

Der Erfindung liegt ferner die Aufgabe zugrunde, die Vorrichtung zur Mikroverfilmung von Dokumenten so auszubilden, daß eine Verfilmung im Durchlauf- oder Durchflußverfahren und durch Umschaltung bzw. durch Austausch weniger Bauelemente auch im Standbildverfahren in einfacher Weise möglich ist, so daß sich auch Diapositivserien und Videoaufnahmen zur Mikroverfilmung nutzen lassen und zwar sowohl zur Beschriftung und Kodifizierung als auch zur vollständigen Verfilmung.

Die Lösung dieser Aufgaben erfolgt gemäß der Erfindung bei der eingangs genannten Vorrichtung dadurch, daß die Wechselobjektivkamera zur Aufnahme im Fließbildverfahren ausgebildet ist und eine weitere, daneben angeordnete Kamera zur Aufnahme im Standbildverfahren ausgebildet ist und daß der durch zwei prozessorgesteuerte Motoren angetriebene Filmtransportschlitten den zu belichtenden Planfilm den Bildpositionen in den Kameras automatisch zuführt.

Im einzelnen weist die Einrichtung zum automatischen Dokumenteinzug gemäß der Erfindung einen Impulsgeber auf, welcher beim Einlaufen eines Dokumentes in die dem Dokumenteinzug nachgeordnete Beleuchtungsebene einen Impuls zur Steuerung der Motore des Filmtransportschlittens zur Ansteuerung der Bildposition in der Wechselobjektivkamera erzeugt.

Der automatische Dokumenteneinzug weist einen Motor zum Antrieb eines Walzensystems sowie eines weiteren Impulsgeber auf, welcher zur Steuerung eines Motors des Filmtransportschlittens diesen mit entsprechenden Impulsen beaufschlagt.

Die Beleuchtungsebene in der Wechselobjektivkamera ist über die maximal verarbeitbare Dokumentenbreite mit einem lichtdurchlässigen Schlitz versehen, und oberhalb und unterhalb der Beleuchtungsebene ist jeweils unter einem Winkel von 45° ein Spiegel angeordnet, von dem die reflektierten Lichtstrahlen über einen weiteren Spiegel durch ein auswechselbares Objektiv der Wechselobjektivkamera zu ihrer Bildebene gelangen, in der sich der zu belichtende Planfilm auf dem in einer zur Bildebene parallelen Ebene bewegbar angeordneten Filmtransportschlitten befindet, derart, daß die Vorder- und die Rückseite des Dokumentes auf dem Planfilm gleichzeitig nebeneinander abbildbar sind.

Die Wechselobjektivkamera weist in vorteilhafter Weise eine Filmkassette mit einer Filmrolle und einer sich anschließenden automatisch betätigbaren Schneidevorrichtung auf, von der der Filmtransportschlitten den so erzeugten Planfilm mit Hilfe einer Ansaugvorrichtung übernimmt und der jeweiligen Bildposition zuführt und synchron zur Bewegung des beleuchteten Dokumentes durchfährt.

Nach der Erfindung erfolgt der Bewegungsablauf des Filmtransportschlittens zur Zuordnung der Bilder auf dem Planfilm in einem vorgegebenen und je nach Dokumentengröße änderbaren Raster mit Hilfe einer Prozessortsteuerung.

Die weitere Kamera zur Standbildaufnahme weist gemäß der Erfindung eine elektronisch gesteuerte und selbstleuchtende alphanumerische Anzeige in der Objektebene auf.

In Weiterbildung der Erfindung ist die Anzeige mehrzeilig oder mit einer Zeile ausgebildet, wobei dann der Bewegungsablauf des Filmtransportschlittens einen Zeilensprung zur hintereinander erfolgenden Aufnahme der Zeile durchführt.

Die weitere Kamera zur Standbildaufnahme weist gemäß der Erfindung ferner eine elektronisch gesteuerte Dia-Einlege- und Durchleuchtungsvorrichtung auf.

Der weiteren Kamera schließt sich ein mit einer Planfilmübergabevorrichtung verbundener Entwicklungsautomat an, wobei der belichtete Planfilm nacheinander verschiedene Arbeitsstationen entlang einer horizontal angeordneten Bahn mit Hilfe eines motorisch angetriebenen Walzensystems durchläuft. Jede Arbeitsstation wird durch ein Flüssigkeitsumlaufsystem aus einem als Transportbehälter ausgebildeten Gefäß über Zu- und Ableitungen mit der jeweils erforderlichen Flüssigkeit automatisch versorgt. Dem Entwicklungsteil des Entwicklungsautomaten schließt sich eine Planfilm- Trockenstation an, so daß der Mikroplanfilm nach vollautomatischer Herstellung die Vorrichtung verläßt und gespeichert werden kann.

Die Erfindung wird anhand der Zeichnung, in der ein Ausführungsbeispiel dargestellt ist, näher erläutert. Hierbei zeigen :

Figur 1 eine schematische Darstellung der kombinierten Vorrichtung nach der Erfindung in einer Seitenansicht ;

Figur 2 eine vergrößerte Darstellung eines Ausschnittes der Transportvorrichtung im Entwicklungsautomaten ;

Figur 3 eine schematische Darstellung der Einrichtung zum automatischen Dokumenteneinzug in Seitenansicht ;

Figur 4 eine Transportwalze, in vergrößerter Darstellung und im Ausschnitt, aus der Einrichtung zum automatischen Dokumenteneinzug ;

Figur 5 ein Formatpositionskamm, in vergrößerter Darstellung und im Ausschnitt, aus der Einrichtung zum automatischen Dokumenteneinzug ;

Figur 6 eine Draufsicht auf die Doppelkameravorrichtung in schematischer und zur Figur 1 geringfügig vergrößerter Darstellung.

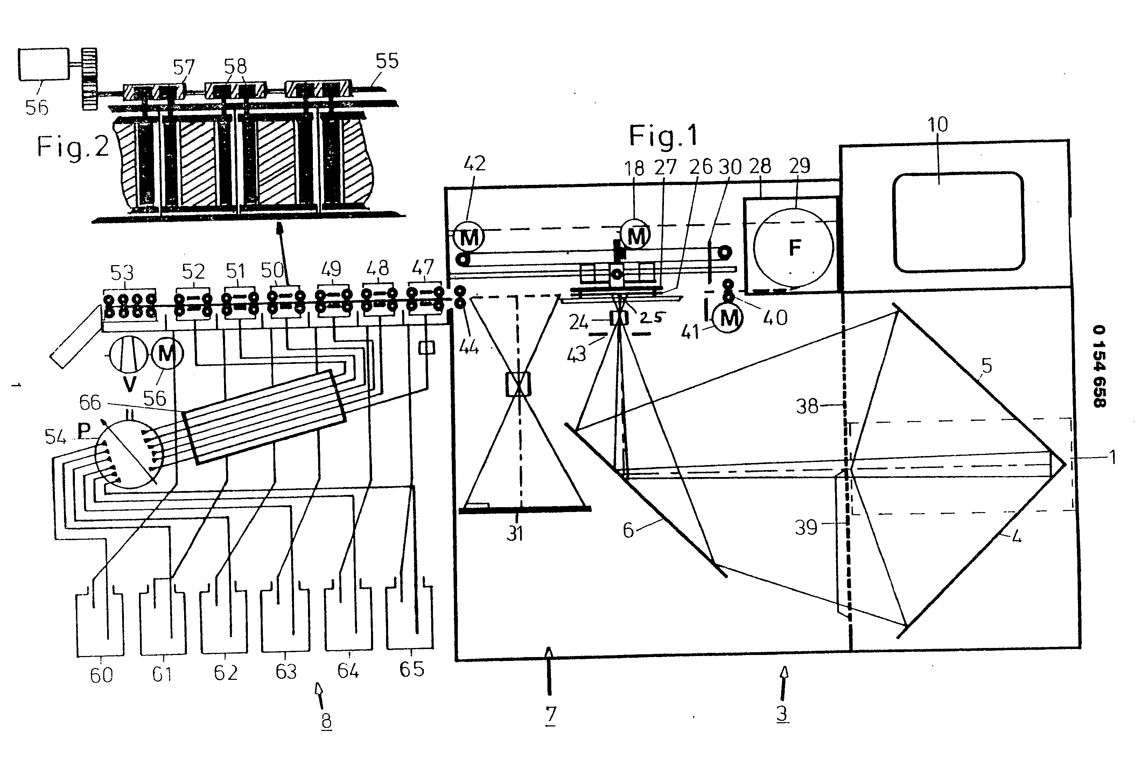

Wie aus der Figur 1 hervorgeht, besteht die Vorrichtung zur Mikroverfilmung aus der Kombination mehrerer Einrichtungen, welche mit Hilfe eines zentralen Rechners überwacht und gesteuert werden. Für die Eingabe der Befehle, Kennzeichnungen und Daten, auf die später noch näher eingegangen wird, ist eine Eingabetastatur 9, und zur visuellen Darstellung ein Monitor 10 sowie eine Mikroprozessoreinrichtung vorgesehen.

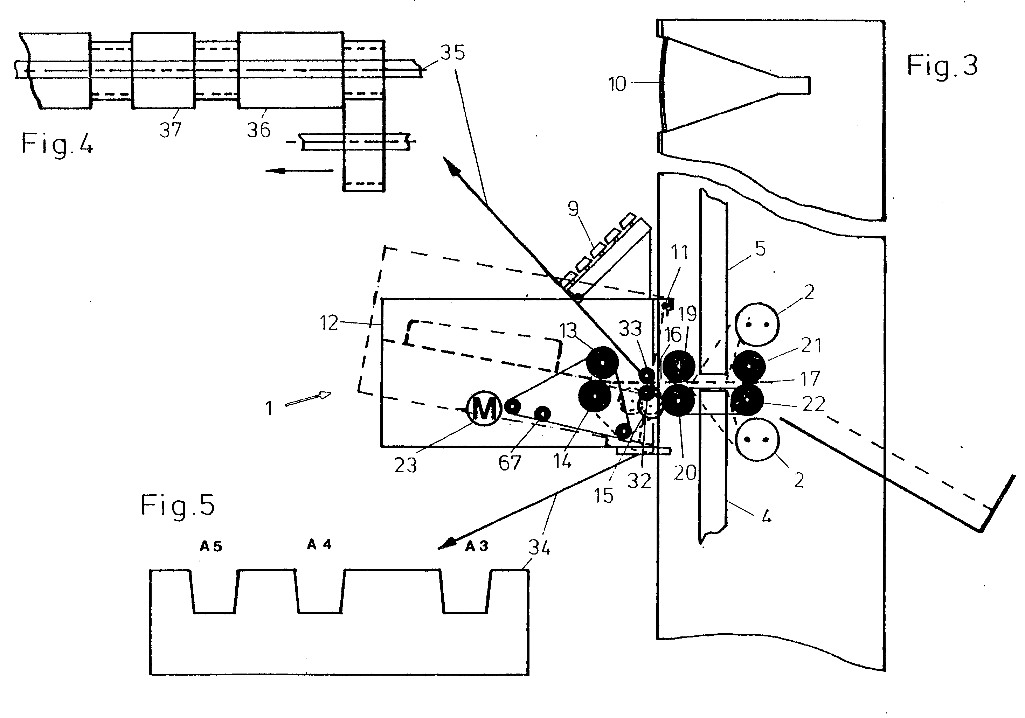

Die Vorrichtung setzt sich aus folgenden Einrichtungen zusammen, wie aus Figur 1 und 3 hervorgeht, nämlich aus :

einer Einrichtung 1 zum automatischen Dokumenteneinzug und -Transport, einschließlich einer Beleuchtungsvorrichtung 2 und einer Formatverstellvorrichtung ;

einer Wechselobjektivkamera 3 mit Beleuchtungs- und Spiegelsystem 4, 5, 6 zur gleichzeitigen Aufnahme der Vor- und Rückseite des Dokuments mit einem automatischen Filmtransport ;

einer weiteren Kamera 7 mit Belichtungssystem zur Titel- und fortlaufenden Kennzeichnungsverfilmung, und

einer automatischen Filmentwicklungsvorrichtung 8.

Die Einrichtung zum automatischen Dokumenteneinzug 1 ist mit einer um eine Achse 11 seitlich verstellbaren Dokumenten-Aufnahmevorrichtung 12 versehen, welche mit einem gegenläufig antreibbaren Walzensystem 13, 14 mit verstellbarem Walzenabstand und mit Walzenoberflächen mit unterschiedlichen Reibkoeffizienten ausgerüstet ist. Dem Walzensystem 13, 14 (s. hierzu Figur 3) schließt sich eine Doppelblattsperre 15 an. Ein als Lichtschranke ausgebildeter Impulsgeber 16 sorgt dafür, daß beim Einlaufen eines Dokumentes in die dem Dokumenteneinzug 1 nachgeordnete Beleuchtungsebene ein Impuls zur Steuerung des Motors 18 erzeugt wird, der sich in der Filmtransportvorrichtung der Wechselobjektivkamera befindet.

Die sich gegenüberstehenden Walzen 13, 14 sind mit einem auf eine Dokumentendicke einstellbaren Feintrieb zur Bildung einer Doppelblattsperre ausgerüstet, wobei ein Kugellager auf einen Mikroschalter einwirkt, der seinerseits über einen Prozessor eine Magnetkupplung der oberen Walze 13 beaufschlagt.

Wie aus der Figur 3 weiter ersichtlich ist, ist den Walzen 13, 14 der Dokumenteneinzugsvorrichtung ein Transportwalzensystem 19, 20, 21, 22 nachgeordnet, deren Walzen 19, 20. und 21, 22 paarweise vor und hinter der zweiseitigen Beleuchtungsebene 17 angeordnet sind. Der Antrieb der Walzen 19-22 erfolgt durch den Motor 23 der Dokumenteneinzugsvorrichtung, der einen Drehimpulsgeber 67 und einen Tachogenerator aufweist.

Die Drehzahl des Motors 23 wird in Abhängigkeit von dem mit Hilfe eines elektronischen Elements unmittelbar vor dem Dokumenteneinlauf integriert gemessenen und verarbeiteten Lichtreflexionsgrades des Dokuments geregelt, wie später noch näher ausgeführt wird.

Die Einrichtung 1 zum automatischen Dokumenteneinzug erfüllt damit mehrere Funktionen. So sorgt sie dafür, daß lediglich ein einziges Dokument vom Dokumentenstapel erfaßt und in die Aufnahme- bzw. Beleuchtungsebene 17 gebracht wird. Hierzu laufen die Walzen 13 und 14 gegeneinander, wobei die Walze 13, welche das Dokument einzieht, eine größere Reibwirkung erzielt, als der Gummi von der unteren gegenlaufenden Walze, welche die unteren Dokumente zurückhält. Sollten dessen ungeachtet zwei oder mehr Blatt Dokumente durch die Walzen 13 und 14 gleichzeitig transportiert werden, so sorgt die folgende Doppelblattsperre in jedem Fall dafür, daß die Dokumente nicht in die Beleuchtungsebene 17 gelangen. Durch den Feintrieb der u. a. aus zwei Walzen 32 und 33 bestehenden Doppelblattsperre werden deren Kugellager so eng justiert, daß nur ein Dokument durchlaufen kann. Werden dagegen zwei oder mehr Dokumente durch den engen Spalt der Walzen gedrückt, so entweichen die Kugellager um mindestens eine Dokumentenstärke und schalten einen Mikroschalter, der seinerseits über einen Prozessor eine Magnetkupplung, beaufschlagt, welche auf die Walze 13 wirkt, so daß der Dokumenteneinzug gestoppt wird.

In diesem Sonderfall, der sich praktisch nur durch besondere Einwirkungen ereignen kann, wie beispielsweise eine unbeabsichtigte Haftung von zwei Dokumenten, muß die Bedienungsperson die Dokumente von Hand einzeln einlegen. In jedem Fall wird eine Fehlaufnahme auf dem Planfilm verhindert bzw. ausgeschlossen.

Läuft ein Dokument in die Beleuchtungsebene 17 ein, so erzeugt der Impulsgeber 16 der Dokumenteneinzugsvorrichtung einen Impuls, der auf den Motor 18 der Wechselobjektivkamera 3 wirkt, wodurch der XY-Schlitten 27 synchron mit dem Dokumententransport in die Y-Richtung bewegt wird. Der Impulsgeber 16 besteht dabei aus einer Lichtschranke. Wird die Lichtschranke bzw. der Impulsgeber 16 durch ein passierendes Dokument betätigt und wird das Dokument von den Transportwalzen 19 und 20 erfaßt, so übernehmen diese den weiteren Transport desselben und setzen gleichzeitig die Magnetkupplung der Walzen 13 und 14 stromlos, bis das Dokument die Beleuchtungsebene 17 verlassen hat.

Der Motor 23 der Einrichtung 1 zum Dokumenteneinzug, welcher einen Impulsgeber 67 und einen Tachogenerator aufweist, treibt gleichzeitig die Transportwalzen 19 bis 22 an, während der Einzugsvorgang der Dokumente durch das Ausschalten der Magnetkupplung gestoppt wird.

Die Dokumenteneinzugsvorrichtung 1 läßt sich für unterschiedlich große Dokumente verwenden, beispielsweise für die Formate DIN A3 bis DIN A5. Um die Rasterung in dem Planfilm einzuhalten, ist es hierfür erforderlich, entsprechende Anschläge vorzusehen, so daß die Dokumente stets gerade in die Beleuchtungsebene einlaufen. Dementsprechend ist die Dokumenten-Einlaufvorrichtung 12 zur Beleuchtungsebene 17 und zur Dokumenteneinlaufrichtung seitlich verstellbar, wie aus der Figur 3 ersichtlich ist. Um die Verstellung der Dokumenten-Einlaufvorrichtung 12 durchzuführen, ist es erforderlich, diese hochzuschwenken und zur Seite aus der Zeichenebene heraus zu bewegen.

Ein Formatpositionskamm 34, der in Figur 5 dargestellt ist, weist dem Format entsprechende Aussparungen auf und die in Figur 4 dargestellte Transportachse 35 sorgt durch die unterschiedlich lange Ausbildung ihrer auf einer Achse befindlichen Zahnräder 36 und 37.dafür, daß der Dokumenteneinzug und damit der Antrieb der Walzen 13 und 14 in jeder Formatposition gleichermaßen erfolgt.

Vor dem Einlauf des Dokuments in die Belichtungsebene 17 erfolgt eine über die Fläche des Dokuments integrierende Messung des Refle-xionsgrades zur Steuerung der Laufgeschwindig-keit des Motors 23. Die gemessenen Reflexionswerte werden im Mikroprozessor verarbeitet und die Laufgeschwindigkeit geregelt, wobei dunkle Dokumente langsamer und helle Dokumente schneller durch die Beleuchtungsebene 17 bewegt werden. Auf diese Weise kann die von der DIN geforderte Normdichte für Mikrofilme erreicht und eingehalten werden.

Die Beleuchtungsebene 17 weist über die maxi-mal verarbeitbare Dokumentenbreite einen licht-durchlässigen Schlitz auf. Oberhalb und unterhalb der Beleuchtungsebene 17 ist jeweils unter einem Winkel von 45° ein Spiegel 4 und 5 angeordnet, dessen reflektierte Lichtstrahlen über einen weiteren Spiegel 6 durch ein auswechselbares Objektiv 24 zur Bildebene 25 gelangen, in der sich der zu belichtende Planfilm 26, welcher von dem Rollfilm 29 abgeschnitten wurde, auf einem in einer zur Bildebene 25 parallelen Ebene motorisch bewegbar angeordnete Schlitten 27 befindet. Die Vorder- und die Rückseite des Dokumentes werden dabei in der Planfilmebene gleichzeitig nebeneinander abgebildet.

Die Wechselobjektivkamera 3 enhält eine Filmkassette 28 mit einer Filmrolle 29 und eine sich anschließende automatisch betätigbare Schneidevorrichtung 30, von der der Schlitten 27 den so erzeugten Planfilm mit Hilfe einer Ansaugvorrichtung übernimmt und der jeweiligen Bildposition zuführt und im Fließbildaufnahmeverfahren, synchron zur Bewegung des beleuchteten Dokumentes, durchfährt. Wird die Kamera 3 alternativ im Standbildverfahren betrieben, verbleiben Schlitten und Planfilm während der Belichtungszeit in der jeweiligen Bildposition.

Zur Halterung des Planfilmes ist der Schlitten 27 mit einer Unterdruckvorrichtung ausgerüstet. Der Bewegungsablauf des Schlittens 27 zur Zuordnung der Bilder auf dem Planfilm erfolgt in einem vorgegebenen und je nach Dokumentengröße änderbaren Raster mit Hilfe der Prozessorsteuerung.

Der oberhalb der Beleuchtungsebene 17 liegende Spiegel 5 reflektiert die Vorderseite und der unterhalb der Beleuchtungsebene 17 liegende Spiegel 4 die Rückseite des Dokumentes auf den Spiegel 6, der zur Beleuchtungsebene 17 eine Neigung von 135° aufweist. Zwischen den Spiegeln 4, 5 und 6 sind Aufnahmeschlitze 38 und 39 angeordnet. Der Schlitz 39 wird dann geschlossen, wenn die Rückseite eines Dokuments nicht aufgenommen werden soll, um das Eintreten von Nebenlicht zu verhindern. Als Lichtquellen 2 für die Beleuchtungsebene 17 werden Leuchtstoffröhren, eine Lampenbank oder Halogenleuchten verwendet. Da die Dokumente und der Planfilm im gleichen Verhältnis wie der Verkleinerungsfaktor über einen schmalen Schlitz der Beleuchtungsebene 17 laufen, sind beide Spiegel 4 und 5 nur ca. 20 mm breit. Somit ist auch der Abbildungsschlitz zwischen der Vorder- und der Rückseite des Dokuments um den Verkleinerungsfaktor kleiner. So beträgt beispielsweise bei einem Verkleinerungsfaktor von 1 : 24 und einer Spiegelbreite von 20 mm die Abbildung am Mikroplanfilm 0,83 mm.

Da das Objektiv 24 austauschbar ist, können verschiedene Verkleinerungsfaktoren verwendet werden. Jedes Objektiv ist dabei mit einem Registerelement ausgerüstet, so daß der Rechner ohne besondere Eingaben den entsprechenden Verkleinerungsfaktor aufnimmt und in seinem Programm verwertet.

Das gleiche optische System kann auch für Standbildaufnahmen verwendet werden. Hierzu ist es lediglich erforderlich die Spiegel so zu vergrößern, daß das gesamte Dokument zu einem Zeitpunkt erfaßt wird, da das Dokument und der Planfilm im Moment der Aufnahme stehen bleiben müssen.

Im Aufnahmeteil der Wechselobjektivkamera 3 ist eine lichtdichte Filmkassette 28 vorhanden, welche einen 105 mm breiten und 30,5 m langen panchromatischen, hochauflösenden Mikrofilm enthält. Der unbelichtete Film wird mit Hilfe der von einem Motor 41 angetriebenen Transportwalzen 40 so weit aus der Filmkassette gezogen, bis zwischen einer Lichtschranke und der Schneidevorrichtung 30 ein Abstand von 148 mm erreicht ist. Sodann wird der Film auf diese vorgeschriebene Länge geschnitten. Die Schneidevorrichtung 30 ist als ein Fallmesser ausgebildet, welches zur Schnittebene schräg verläuft.

Der XY-Schlitten 27, der von dem Motor 18 in Y-Richtung und von dem Motor 42 in X-Richtung angetrieben wird, fährt über den abgeschnittenen DIN A6 Planfilm und saugt diesen mittels eines durch eine Vakuumpumpe erzeugten Unterdruckes an. Der Film liegt dabei absolut plan unter dem Schlitten 27.

Alle Funktionen des Aufnahmeteils und die Bewegungsschritte, die der XY-Schlitten durchführen muß, damit die Belichtungen an den definierten Stellen des Planfilms erfolgen können, werden von dem Rechner entsprechend der verwendeten Optik und der verwendeten Formate sowie der Rasterung gesteuert. Der DIN A6 Film kann daher mit den unterschiedlichsten Rastern belichtet werden, und zwar in Abhängigkeit von dem Verkleinerungsfaktor und der Größe des Dokuments. Die Rasterung bestimmt auch die Aufnahmezahl pro Planfilm.

Die Position eines jeden einzelnen Bildes wird alphanumerisch erfaßt und durch den Rechner festgehalten. Die vorliegende Kamera ist hinsichtlich ihrer Programmierung derartig ausgelegt, daß sie die Dokumente in die von der DIN vorgeschriebenen Raster belichtet.

Die Positionierungen der einzelnen Dokumente können als Codierungen auf dem Planfilm und/ oder auf besonderen Datenträgern festgehalten werden, so daß diese Werte von den nachfolgenden Lesegeräten zum Auffinden der spezifischen Dokumente verwendet werden können. Grundsätzlich lassen sich alle denkbaren Rasterungen verwenden, da dies nur eine Frage der Programmierung ist.

Im Gegensatz zu einer bekannten Schrittschaltkamera läuft der XY-Schlitten mit dem Film, sobald das Dokument in die Aufnahme- und Beleuchtungsebene eintritt, kontinuierlich, gegenläufig und synchron in dem vom Verkleinerungsfaktor bestimmten Verhältnis ab, bis der vom Raster bestimmte Bildstrich erreicht ist. Die gegenläufige Bewegung erfolgt durch die bildumkehrende Wirkung der Optik.

Sobald auf der Y-Achse des Planfilmes alle Aufnahmen belichtet sind, rückt der Schlitten auf der X-Achse beim Simplex-Verfahren, d. h. bei Belichtung nur einer Seite des Dokuments, in die nächste Spalte oder im Duplex-Verfahren, d. h. bei Belichtung der Vor- und Rückseite des Dokuments, in die übernächste Spalte. Gleichzeitig fährt der Y-Motor den XY-Schlitten wieder in die Anfangsposition der Aufnahmespalte des Planfilmes.

Ist der gesamte Planfilm belichtet oder die für diesen Planfilm bestimmte Charge der Dokumente abgeschlossen, so fährt der XY-Schlitten in die Kamera 7, welche sich der Wechselobjektivkamera 3 unmittelbar mit einem eigenen Belichtungssystem zur Titel- und Kennzeichnungsverfilmung anschließt. Auch dieser Bewegungsvorgang des XY-Schlittens mit dem belichteten Planfilm erfolgt vollautomatisch durch die Steuerung des Rechners. Unterhalb der Optik, d. h. in ihrem Strahleneingang befindet sich ein Hilfsverschluß 43 (s. hierzu Figur 1), welcher den Film vor Fremdlicht während des Stillstandes beim Bildstrich, während des Rücklaufes, d. h. beim sogenannten Spaltensprung und während die Kamera ausgeschaltet ist, schützt.

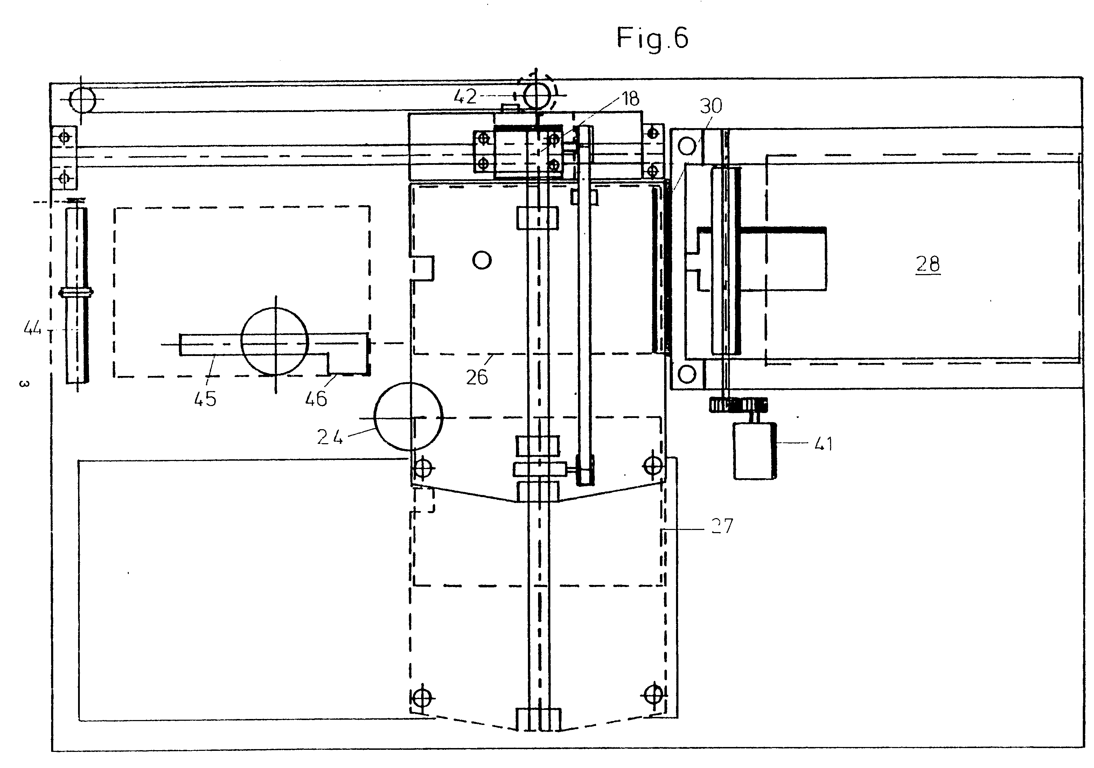

Die weitere Kamera 7 zur Kennzeichnungsverfilmung weist eine elektronisch gesteuerte und selbstleuchtende alphanumerische Anzeige 31 in der Objektebene der Kamera 7 auf. Ferner ist die Kamera 7 zur Kennzeichnungsverfilmung mit einer elektronisch gesteuerten Dia-Einlege- und Durchleuchtungsvorrichtung versehen (s. hierzu Figur 1 und 6). Die Anzeige 31 kann mehrzeilig ausgebildet sein oder der Bewegungsablauf des XY-Schlittens 27 ist bei einer einzeiligen Anzeige mit einem Zeilensprung zur hintereinander erfolgenden Aufnahme der Zeile programmiert.

Die Beschriftung der Anzeige 31 erfolgt mit Hilfe der Tastatur 9 oder automatisch, beispielsweise bei einer fortlaufenden Zählung oder bei der Datumseingabe, falls dies gewünscht wird. Für die Titeleingabe ist auf dem Planfilm ein bestimmtes Feld vorgesehen, sodaß bei den üblichen Normen ein entsprechender Titelschlitz 45 vorgesehen ist.

Während die elektronische Anzeige 31 selbstleuchtend ausgebildet ist, ist es erforderlich, für die Verfilmung eines Dias eine Durchleuchtungsvorrichtung vorzusehen. Ein besonderer Dia-Schlitz 46 sorgt für die richtige Feldzuordnung auf dem Planfilm.

Die mit der Hauptkamera integrierte Titelbelichtungsvorrichtung erlaubt es dem Anwender unmittelbar nach der Belichtung des Planfilms in wenigen Sekunden hintereinander über den belichteten in Spalten angeordneten Aufnahmen in einer Planfilmlänge von 148 mm Länge ohne Hilfsmittel in lesbarer Größe verschiedene Kennzeichnungen durch Belichtungen aufzubringen, nämlich beispielsweise eine Firmenkennzeichnung mittels eines eingegebenen Dias, einen ein- oder mehrzeiligen Titel, mit beispielsweise 40 Zeichen zu setzen und/oder ein Datum und eine fortlaufende Registriernummer oder einen Code einzugeben. Ein in die Eingabe bzw. Tastatur 9 des Rechners eingegebener Text für die Anzeige kann natürlich beliebig oft verwendet oder abgeändert werden. Die Belichtungszeiten werden automatisch vom Rechner bestimmt, welcher gemessene Lichtwerte verarbeitet und entsprechend auswertet.

Der Kamera 7 schließt sich unmittelbar eine Planfilmübergabevorrichtung 44 an, welche den fertig belichteten Planfilm dem XY-Schlitten entnimmt und ihn der Enwicklungsstation 8 zuführt. In dem Entwicklungsautomaten 8 durchläuft der belichtete Planfilm nacheinander verschiedene Arbeitsstationen 47 bis 53 entlang einer horizontal angeordneten Bahn mit Hilfe eines motorisch angetriebenen Walzensystems. Hierzu wird auf die Figuren 1 und 2 verwiesen. Jede Arbeitsstation 47 bis 52 wird durch ein Flüssigkeitsumlaufsystem 54 aus einem als Transportbehälter ausgebildeten Gefäß über Zu- und Ableitungen mit der jeweils erforderlichen Flüssigkeit versorgt. Dem Entwicklungsteil des Entwicklungsautomaten schließt sich eine Planfilm-Trockenstation 53 an, welche den nunmehr fertig belichteten und getrockneten Film abgibt.

Der Filmtransport in dem Entwicklungsautomaten erfolgt mit Hilfe eines Transportrollensystems, welches in vergrößerter Darstellung in Figur 2 wiedergegeben ist. Eine vom Motor 56 angetriebene durchgehende Königswelle 55 ist mit Spindeln 57 ausgerüstet, in die Zahnräder 58 eingreifen, welche ihrerseits mit Transportrollen verbunden sind.

Mit dem Entwicklungsautomaten läßt sich sowohl ein Negativ-Prozeß als auch Positiv- oder Vollumkehrprozeß durchführen, wozu lediglich die Flüssigkeitsgefäße auszutauschen sind. Für den Negativ-Prozeß werden ein Entwickler, ein Stoppbad, ein Fixierbad und 3 Spülbäder benötigt, während für den Vollumkehr-Prozeß ein erster Entwickler, eine erste Spülung, ein Bleichbad, ein Klärbad, ein zweiter Entwickler und eine zweite Spülung erforderlich sind. Der Film dürchläuft dabei waagerecht den Automaten, und die Chemikalien werden aus den Verpackungsflaschen 60 bis 65 im Umlaufverfahren durch die Pumpe 54 und den Wärmetauscher 66 an den Film gespült. Hierbei werden die Bäder auf die erforderliche Betriebstemperatur mit Hilfe einer Elektronik gehalten, welche erst bei Erreichen der erforderlichen Betriebstemperaturen den Entwicklungsautomaten freigibt.

Zum Rechner oder Computer ist die Tastatur 9 und der Monitor 10 zu zählen.

Der Rechner übernimmt alle Steuer- und Regelfunktionen sowie Funktionsüberwachungen und zeigt die wichtigsten, je nach Programmierung, auf dem Monitor an.

Von besonderer Bedeutung ist die Anzeige des Rasters in Form einer Schablone, wobei jede belichtete Aufnahme in dem entsprechenden Feld bezeichnet wird. Die Bedienungsperson kann daher zu jedem Zeitpunkt erkennen, welches Feld im Raster gerade belichtet wurde und welche Felder noch frei sind.

Mit der Verfilmung kann jedem Dokument über die Tastatur 9 ein Suchbegriff eingegeben werden, welcher über den Rechner einem Speichermedium zugeführt werden kann.

Das Speichermedium kann der Planfilm selbst sein, der beispielsweise mit einem optisch oder magnetisch lesbaren Strich-Code versehen werden kann, oder in Form einer Diskette oder eines Magnetbandes, das der Planfilmserie zuzuordnen ist.

Wird dieses Speichermedium an ein entsprechendes Lesegerät oder Leserückvergrößerungsgerät angeschlossen, so ergibt sich der große Vorteil, daß mittels des Suchbegriffes jede einzelne Aufnahme in sehr kurzer Zeit auf der Mattscheibe des Lesegerätes erscheint, und zu lesen ist oder eine Rückkopie erstellt werden kann.

**Patentansprüche**

1. Vorrichtung zur rechnergesteuerten Mikroverfilmung der Vor- und/oder Rückseite von Dokumenten verschiedener Formate auf Mikroplanfilmen und zur Entwicklung derselben im Durchlaufverfahren, mit einer Einrichtung (1) zum automatischen Dokumenteneinzug aus einem eingegebenen Stapel von Dokumenten eines bestimmten Formates und zum automatischen Transport durch eine Beleuchtungsvorrichtung (2), mit einer Formatverstellvorrichtung und einer Wechselobjektivkamera (3) mit Beleuchtungs- und Spiegelsystem (4, 5, 6) sowie einem motorgetriebenen Filmtransportschlitten, dadurch gekennzeichnet, daß die Wechselobjektivkamera (3) zur Aufnahme im Fließbildverfahren ausgebildet ist und eine weitere, daneben angeordnete Kamera (7) zur Aufnahme im Standbildverfahren ausgebildet ist und daß der durch zwei prozessorgesteuerte Motoren (18, 42) angetriebene Filmtransportschlitten (27) den zu belichtenden Planfilm den Bildpositionen in den Kameras automatisch zuführt.

2. Vorrichtung nach Anspruch 1, dadurch gekennzeichnet, daß die Einrichtung zum automatischen Dokumenteneinzug (1) einen Impulsgeber (16) aufweist, welcher beim Einlaufen eines Dokumentes in die dem Dokumenteneinzug (1) nachgeordnete Beleuchtungsebene einen Impuls zur Steuerung der Motoren (18, 42) des Filmtransportschlittens zur Ansteuerung der Bildposition in der Wechselobjektivkamera (3) erzeugt.

3. Vorrichtung nach Anspruch 1 oder 2, dadurch gekennzeichnet, daß die Einrichtung zum automatischen Dokumenteneinzug (1) einen Motor (23) zum Antrieb eines Walzensystems (13, 14) sowie einen weiteren Impulsgeber (67) aufweist, welcher zur Steuerung eines Motors (18) des Filmtransportschlittens diesen mit entsprechenden Impulsen beaufschlagt.

4. Vorrichtung nach einem der voranstehenden Ansprüche, dadurch gekennzeichnet, daß die Beleuchtungsebene (17) in der Wechselobjektivkamera über die maximal verarbeitbare Dokumentenbreite einen lichtdurchlässigen Schlitz aufweist, und daß oberhalb und unterhalb der Beleuchtungsebene (17) jeweils unter einem Winkel von 45° ein Spiegel (4, 5) angeordnet ist, von dem die reflektierten Lichtstrahlen über einen weiteren Spiegel (6) durch ein auswechselbares Objektiv (24) der Wechselobjektivkamera (3) zu ihrer Bildebene (25) gelangen, in der sich der zu belichtende Planfilm (26) auf dem in einer zur Bildebene (25) parallelen Ebene bewegbar angeordneten Filmtransportschlitten (27) befindet, derart, daß die Vorder- und die Rückseite des Dokuments auf dem Planfilm gleichzeitig nebeneinander abbildbar sind.

5. Vorrichtung nach einem der voranstehenden Ansprüche, dadurch gekennzeichnet, daß die Wechselobjektivkamera (3) eine Filmkassette (28) mit einer Filmrolle (29) und einer sich anschließenden automatisch betätigbaren Schneidevorrichtung (30) aufweist, von der der Filmtransportschlitten (27) den so erzeugten Planfilm mit Hilfe einer Ansaugvorrichtung übernimmt und der jeweiligen Bildposition zuführt und synchron zur Bewegung des beleuchteten Dokumentes durchfährt.

6. Vorrichtung nach einem der voranstehenden Ansprüche, dadurch gekennzeichnet, daß der Bewegungsablauf des Filmtransportschlittens (27) zur Zuordnung der Bilder auf dem Planfilm in einem vorgegebenen und je nach Dokumentengröße änderbaren Raster mit Hilfe einer Prozessorsteuerung erfolgt.

7. Vorrichtung nach einem der voranstehenden Ansprüche, dadurch gekennzeichnet, daß die weitere Kamera (7) zur Standbildaufnahme eine elektronisch gesteuerte und selbstleuchtende alphanumerische Anzeige (31) in der Objektebene aufweist.

8. Vorrichtung nach Anspruch 7, dadurch gekennzeichnet, daß die Anzeige (31) mehrzeilig ausgebildet ist oder mit einer Zeile, wobei dann der Bewegungsablauf des Filmtransportschlittens (27) einen Zeilensprung zur hintereinander erfolgenden Aufnahme der Zeile durchführt.

9. Vorrichtung nach einem der voranstehenden Ansprüche, dadurch gekennzeichnet, daß die weitere Kamera (7) zur Standbildaufnahme eine elektronisch gesteuerte Dia-Einlege- und Durchleuchtungsvorrichtung aufweist.

10. Vorrichtung nach einem der voranstehenden Ansprüche, dadurch gekennzeichnet, daß sich der weiteren Kamera (7) ein mit einer Planfilmübergabevorrichtung verbundener Entwicklungsautomat (8) anschließt, wobei der belichtete Planfilm nacheinander verschiedene Arbeitsstationen (47-52) entlang einer horizontal angeordneten Bahn mit Hilfe eines motorisch angetriebenen Walzensystems durchläuft, und jede Arbeitsstation durch ein Flüssigkeitsumlaufsystem aus einem als Transportbehälter ausgebildeten Gefäß über Zu- und Ableitungen mit der jeweils erforderlichen Flüssigkeit versorgt wird, und daß sich dem Entwicklungsteil des Entwicklungsautomaten eine Planfilm- Trockenstation (53) anschließt.

**Claims**

1. A device for computer-controlled microfilming the front and/or rear sides of documents having various sizes on microplanar films and for developing the latter in a continuous method, comprising a device (1) for automatically feeding documents from a supplied stack of documents of a certain size and for automatic transportation through an illuminating device (2), a size-adjustment device and an interchangeable-lens camera (3) with illumination and mirror system (4, 5, 6) and a motor-driven film transport carriage, characterized by that the interchangeable-lens camera (3) is provided for taking moving-film pictures, and a further camera (7) arranged beside is provided for still-film pictures, and that the film transport carriage (27) driven by two processor-controlled motors (18, 42) feeds the plane film to be exposed automatically to the image positions in said cameras.

2. A device according to claim 1, characterized by that the device (1) for automatically feeding documents is provided with a pulse generator (16) generating, with a document being fed to the illumination plane behind said document feeding device (1), a pulse for controlling the motors (18, 42) of the film transport carriage for the purpose of selecting the image position in the interchangeable-lens camera (3).

3. A device according to claims 1 or 2, characterized by that the device (1) for automatically feeding documents is provided with a motor (23) for driving a roller system (13, 14) and with a further pulse generator (67) delivering appropriate pulses for controlling a motor (18) of the film transport carriage to said motor.

4. A device according to one of the preceding claims, characterized by that the illumination plane (17) in the interchangeable-lens camera is provided with a transparent slot over the document width to be processed at most, and that above and below said illumination plane (17), one mirror (4, 5) each is arranged at an angle of 45°, from said mirror the reflected light rays arriving over another mirror (6) through an interchangeable lens (24) of the camera (3) a their image plane (25), in which the plane film (26) to be exposed is arranged on a film transport carriage (27) displaceable in a plane parallel to said image plane (25), such that front and rear sides of the document can be projected simultaneously side-by-side on the plane film.

5. A device according to one of the preceding claims, characterized by that the interchangeable-lens camera (3) is provided with a film cartridge (28) containing a film spool (29) and with a subsequent automatic cutting device (30), from where the film transport carriage (27) takes over the thus produced plane film by means of a suction device, feeds it to the respective image position and passes it through in synchronism with the movement of the illuminated document.

6. A device according to one of the preceding claims, characterized by that the sequence of movements of the film transport carriage (27) for coordination of the images on the plane film is effected in a specified pattern to be modified depending on the document size by means of a processor controller.

7. A device according to one of the preceding claims, characterized by that the further camera (7) for still-film pictures is provided with an electronically controlled and self-lighting alphanumeric display in the object plane.

8. A device according to claim 7, characterized by that the display (31) is a multi-line device, or has one line only, in which case the sequence of movements of the film transport carriage (27) performs a line jump to the successive exposure of the line.

9. A device according to one of the preceding claims, characterized by that the further camera (7) for still-film pictures is provided with an electronic slide insertion and illumination device.

10. A device according to one of the preceding claims, characterized by that to the further camera (7), an automatic developing machine (8) connected with a plane-film transfer device is attached, the exposed plane film passing successively various processing stations (47-52) along a horizontally arranged track by means of a motor-driven roller system, and each processing station being supplied by a liquid circulation system from a reservoir in the form of a transportation container over inlets and outlets with the respectively necessary liquid, and that a plane film drying station (53) is attached to the developing section of the automatic developing machine.

**Revendications**

1. Dispositif pour le microfilmage commandé par ordinateur de la face avant et/ou arrière de documents ayant des formats différents sur des films micro-planaires et pour le développement de ceux-ci en continu, avec un dispositif (1) pour l'alimentation automatique de documents d'une pile mise en place de documents ayant un certain format et pour le transport automatique à travers d'un dispositif d'éclairage (2), avec un dispositif de réglage du format et une caméra à objectif interchangeable (3) avec système d'éclairage et à miroir (4, 5, 6) ainsi qu'avec un coulisseau transporteur marchant au moteur pour le film, caractérisé en ce que la caméra à objectif interchangeable (3) est prévue pour reproduction par méthode d'images mobiles et une autre caméra (7) arrangée à côté est prévue pour reproduction par méthode d'images immobiles, et que le coulisseau transporteur (27) marchant à deux moteurs (18, 42) commandés par processeur pour le film alimente automatiquement le film planaire à impressionner aux positions d'image dans les caméras.

2. Dispositif selon la revendication 1, caractérisé en ce que le dispositif (1) pour l'alimentation automatique de documents est pourvu d'un impulseur (16) générant lors de l'entrée d'un document au plan d'éclairage en aval de l'alimentation de documents (1) une impulsion pour la commande des moteurs (18, 42) du coulisseau transporteur pour le film en vue de commander la position d'image dans la caméra (3) à objectif interchangeable.

3. Dispositif selon la revendication 1 ou 2, caractérisé en ce que le dispositif (1) pour l'alimentation automatique de documents est pourvu d'un moteur (23) pour l'actionnement d'un système de rouleaux (13, 14) ainsi que d'un autre impulseur (67) alimentant un moteur (18) du coulisseau transporteur pour le film avec des impulsions correspondantes pour commander celui-ci.

4. Dispositif selon une des revendications précédentes, caractérisé en ce que le plan d'éclairage (17) dans la caméra à objectif interchangeable est pourvu d'une fente transparente sur la largeur maximale d'un document à traiter, et qu'au-dessus et au-dessous du plan d'éclairage (17), des miroirs (4, 5) sont disposés chacun à un angle de 45°, les rayons lumineux réfléchis parvenant par l'intermédiaire d'un autre miroir (6) à travers d'un objectif interchangeable (24) de la caméra à objectif interchangeable (3) à leur plan d'image (25), où le film planaire (26) à impressionner se trouve sur le coulisseau transporteur (27) pour le film amovible dans un plan parallèle au plan d'image (25), de telle manière que l'on puisse faire des images de la face avant et arrière du document simultanément l'une à côté de l'autre sur le film planaire.

5. Dispositif selon une des revendications précédentes, caractérisé en ce que la caméra à objectif interchangeable (3) est pourvue d'une cassette de film (28) avec une bobine de film (29) et puis avec un dispositif coupeur (30) actionnable automatiquement, le coulisseau transporteur (27) pour le film recevant le film planaire ainsi produit à l'aide d'un dispositif d'aspiration et l'amenant à la position respective d'image et le passant en synchronisation au mouvement du document éclairé.

6. Dispositif selon une des revendications précédentes, caractérisé en ce que le déroulement des mouvements du coulisseau transporteur (27) pour le film pour la coordination des images sur le film planaire est effectué en une grille prédéfinie et variable selon la largeur du document à l'aide d'une commande à processeur.

7. Dispositif selon une des revendications précédentes, caractérisé en ce qu'une autre caméra (7) pour reproduction d'images immobiles est pourvue d'un afficheur (31) alphanumérique commandé électroniquement et auto-lumineux dans le plan de l'objet.

8. Dispositif selon la revendication 7, caractérisé en ce que l'afficheur (31) est du type multiligne ou du type monoligne, dans ce cas le déroulement des mouvements du coulisseau transporteur (27) pour le film effectuant un entrelacement de lignes à la reproduction de la ligne effectuée l'une après l'autre.

9. Dispositif selon une des revendications précédentes, caractérisé en ce que l'autre caméra (7) pour reproduction d'images immobiles est pourvue d'un dispositif commandé électroniquement d'insertion et d'éclairage par transparence de diapositives.

10. Dispositif selon une des revendications précédentes, caractérisé en ce qu'un automate de développement (8) raccordé à un dispositif à transfert du film planaire est attaché à l'autre caméra (7), le film planaire impressionné passant successivement des stations de traitement (47-52) différentes le long d'une voie disposée horizontalement à l'aide d'un système de rouleaux marchant au moteur, et chaque station de traitement étant alimentée du liquide nécessaire respectivement par un système de circulation de liquide d'un réservoir en forme d'un conteneur à transport par l'intermédiaire de conduites d'amenée et de dérivation, et qu'une station de séchage (53) du film planaire est attachée à la section de développement de l'automate de développement.

Fig.1

Fig.2

Fig.3

Fig.4

Fig.5

0 154 658

2

Fig.6